# EUROPÄISCHE PATENTSCHRIFT

(11) **EP 3 733 382 B1**
(45) Veröffentlichungstag und Bekanntmachung des Hinweises auf die Patenterteilung: **02.07.2025**
(21) Anmeldenummer: 19172260.2
(22) Anmeldetag: 02.05.2019
(51) Int. Cl.: B29C 65/78, B29C 65/00, B65B 51/14, B65B 51/16

(54) **VORRICHTUNG ZUM HERSTELLEN EINES MIT EINER UMHÜLLUNG VERSEHENEN, EIN BRÜHFÄHIGES MATERIAL ENTHALTENDEN BEUTELS**
DEVICE FOR PRODUCING A BAG WITH A COATING CONTAINING A BREWABLE MATERIAL
DISPOSITIF DE FABRICATION D'UN SACHET DOTÉ D'UNE ENVELOPPE, CONTENANT UN MATÉRIAU POUVANT ÊTRE INFUSÉ

(43) Veröffentlichungstag der Anmeldung: 04.11.2020
(73) Patentinhaber: TEEPACK SPEZIALMASCHINEN GMBH & CO. KG, 40667 Meerbusch (DE)
(72) Erfinder: Reichel, Wolfgang, 47877 Willich (DE)
(74) Vertreter: Grünecker Patent- und Rechtsanwälte PartG mbB

(56) Entgegenhaltungen:
- EP-A1- 0 095 542
- EP-A1- 2 231 479
- EP-A1- 3 330 191
- WO-A1-93/07060
- US-A- 4 479 834

## Beschreibung

Die vorliegende Erfindung betrifft eine Vorrichtung zum Herstellen einer Verpackungseinheit, die einen ein brühfähiges Material enthaltenden Beutel umfasst, der in einer üblicherweise aromadichten Umhüllung vorgesehen ist.

Eine gattungsgemäße Vorrichtung mit den oberbegrifflichen Merkmalen ist aus EP 2 231 479 B1 bekannt. Bei dieser vorbekannten Vorrichtung wird der Beutel zunächst in einer Umhüllungsstation zwischen einander gegenüberliegende Schenkel einem als ebene Bahn zugeführten Umhüllungsmaterial gelegt, indem der Beutel auf die Bahn gelegt und diese um den Beutel gefaltet und von zu einemzugeführten Umhüllungsmaterial abgeschnitten wird, sodass ein Umhüllungsmaterialstück vorgefertigter Länge den Beutel in sich aufnimmt. Durch das Falten des Umhüllungsmaterials wird ein Rand der Umhüllung des Beutels bereits gebildet. Es besteht allerdings die Notwendigkeit, eine U-förmig ausgebildete Siegelnaht zu formen, sodass die Umhüllung umfänglich um den Beutel herum geschlossen ist und sich eine aromadichte Verpackung des brühfähigen Materials innerhalb des Beutels ergeben kann.

Bei diesem brühfähigen Material handelte sich in der Regel um Tee oder anderes aufgussfähiges Material aus getrocknetem Pulver oder Blättern, dessen Qualität und Geschmack durch Umwelteinflüsse beeinträchtigt werden kann, sodass die zuvor erwähnte aromadichte Verpackung notwendig sein kann. Dies gilt auch für die vorliegende Erfindung.

Das Ausbilden der U-förmigen Siegelnaht erfolgt bei dem zuvor erwähnten Stand der Technik über eine Siegeleinrichtung, die an der Außenumfangsfläche eines Karussells eine Vielzahl von Siegeleinheiten aufweist, die jeweils für sich gegeneinander verschwenkbare Siegelbacken aufweisen, die die Umhüllung zusammen mit dem Beutel empfangen und im Rahmen einer schrittweisen Drehbewegung des Karussells geschlossen werden, um während der Drehbewegung des Karussells die U-förmigen Ränder der Umhüllung durch Schweißen zu versiegeln und die so geschlossene Umhüllung an einer anderen Station abzugeben.

Aus der EP 3 330 191 A1 bzw. EP 0 095 542 A1 sind Schweißeinrichtungen mit Walzen bekannt, deren Drehachsen mit Bezug auf die zu schweißende Bahn auf gegenüberliegenden Seiten vorgesehen sind.

Die vorbekannten Lösungen bieten noch Raum für Verbesserungen.

Im Hinblick darauf wird mit der vorliegenden Erfindung eine Vorrichtung mit den Merkmalen von Anspruch 1 angegeben.

Die erfindungsgemäße Vorrichtung umfasst in an sich bekannter Weise eine Beutelherstellungseinrichtung. Diese muss sich nicht von der in EP 2 231 479 B1 beschriebenen Beutelherstellungseinrichtung unterscheiden. Sie kann aber alternativ auch gemäß EP 2 626 318 A1, EP 1 479 612 A1, EP 2 572 996 A1 oder EP 1 153 833 A1 ausgebildet sein. Dabei kann die Beutelherstellungseinrichtung so ausgebildet sein, dass zusammen mit dem Beutel auch ein Faden mit diesem verbunden wird, dessen anderes Ende mit einem Etikett versehen ist, wie dies beispielsweise aus EP 2 231 479 B1 bekannt ist.

Die erfindungsgemäße Vorrichtung hat ferner eine Siegelstation, um den Beutel gegebenenfalls zusammen mit dem Faden und dem Etikett in eine Umhüllung einzuschließen. Diese Siegelstation ist üblicherweise so ausgebildet, dass der Beutel aromadicht in der Umhüllung aufgenommen ist. Die Umhüllung ist als solches beispielsweise aus DE 296 09 717 U1 bekannt. Auch bei der dort beschriebenen Ausgestaltung wird die Umhüllung durch Einschlagen des Beutels gegebenenfalls zusammen mit dem Faden und dem Etikett geformt, wobei diese Einheit aus der Umhüllung und dem Beutel zur Ausbildung einer U-förmigen Naht gesiegelt wird. Dazu kann die Siegelstation die einander gegenüberliegenden Lagen der Umhüllung mittels Schweißen verbinden. Aber auch andere Arten der Verbindung wie beispielsweise das Rändeln oder Verkleben sind denkbar. Diese Verbindungsarten können auch in Kombination aufgebracht werden.

Die erfindungsgemäße Vorrichtung hat eine Siegelstation mit einer ersten und einer zweiten Welle, wobei die Wellen jeweils zumindest eine ihnen zugeordnete Siegelbacke tragen. Üblicherweise hat die erste Welle mehrere erste Siegelbacken und die zweite Welle mehrere diesen ersten Siegelbacken entsprechend zugeordnete zweite Siegelbacken. Die erste und die zweite Siegelbacke bilden jeweils ein Siegelelement zum Einsiegeln der Umhüllung aus. Mit anderen Worten sind die beiden ersten und zweiten Siegelbacken als Paar vorgesehen, um den Beutel innerhalb der Umhüllung einzusiegeln. Bevorzugt ist das durch die beiden Siegelbacken gebildete Siegelelement dabei zum Ausbilden einer U-förmigen Siegelnaht ausgebildet, sodass zwei einander gegenüberliegende Längsränder und ein sich quer dazu erstreckender Querrand versiegelt werden kann. Denn auch bei der erfindungsgemäßen Vorrichtung wird die Umhüllung üblicherweise umgeschlagen, um den Beutel zunächst zwischen einander gegenüberliegenden Schenkeln der Umhüllung vorzusehen, die durch die U-förmigen Siegelnaht miteinander verbunden werden, bevorzugt so miteinander verbunden werden, dass der Beutel aromadicht in der Umhüllung aufgenommen ist. Dazu ist es notwendig, dass die Siegelnaht von einem Ende des gefalteten Randes zu dem anderen Ende des gefalteten Randes kontinuierlich umläuft. Nicht erforderlich ist es dazu, dass die Naht durchgehend ausgebildet ist. Vielmehr können auch mehrere Nähte alternierend vorgesehen sein, die jeweils fluiddicht aneinander angrenzen, gegebenenfalls auch quer zu dem Rand der Umhüllung verspringen.

Die ersten und zweiten Wellen der erfindungsgemäßen Vorrichtung sind relativ zueinander beweglich. Damit ist insbesondere eine Beweglichkeit in Dreh- bzw. Schwenkrichtung der Wellen gemeint. Denn durch die relative Beweglichkeit der ersten und zweiten Welle zueinander können die Siegelbacken eines der Siegelelemente zur Aufnahme des Beutels und der Umhüllung voneinander beabstandet werden bzw. zum Siegeln der Umhüllung gegeneinander angelegt werden. Die Siegelstation der erfindungsgemäßen Vorrichtung hat bevorzugt in eine, besonders bevorzugt mehrere im Wesentlichen starr an der zugeordneten Welle befestigte Siegelbacken. Soweit diese Weiterbildung auf im Wesentlichen starr befestigte Siegelbacken abstellt, sei darauf hingewiesen, dass zum Toleranzausgleich zumindest eine der Siegelbacken des Segelelementes so elastisch gegenüber der zugehörigen Welle abgestützt sein kann, dass sich die beiden Siegelbacken in der im Folgenden als Siegelstellung benannten Stellung, bei welcher die Siegelbacken zum Siegeln der Umhüllung gegeneinander anliegen, mit einer gewissen Vorspannung anliegen können. Dazu wird gemäß einer bevorzugten Weiterbildung der vorliegenden Erfindung ein Vorspannelement vorgeschlagen, welches einer oder beiden Siegelbacken zugeordnet sein kann. Das elastische Element kann auch einer ersten oder zweiten Welle zugeordnet sein.

Im Gegensatz zu dem zuvor erwähnten Stand der Technik gemäß EP 2 231 479 B1 hat die erfindungsgemäße Lösung kein Karussell mit auf dem Karussell montierten Siegelelementen, die jeweils zwei Siegelbacken umfassen, von denen eine jeweils verschwenkbar zu der anderen angeordnet ist. Vielmehr weist die erfindungsgemäße Lösung zwei unterschiedlichen Wellen zugeordnete Siegelbacken auf, die jeweils für sich ein Siegelelement ausbilden und durch Drehung der die jeweiligen Siegelbacken haltenden Wellen relativ zueinander in die Siegelstellung bzw. eine Aufnahmestellung gestellt werden können, die die Aufnahme des Beutels und der Umhüllung zwischen die Siegelbacken ermöglicht.

Die erfindungsgemäße Vorrichtung hat dementsprechend weniger Teile als die aus der EP 2 231 479 B1 bekannte, die im Rahmen des Vortriebs der Siegelstation drehend bewegt werden. Dabei kann wie in dem zuvor erwähnten Stand der Technik das jeweilige Siegelelement schrittweise verschwenkt bzw. gedreht werden, was mit erheblichen negativen und positiven Beschleunigungswerten verbunden ist. So ergibt sich aus der Möglichkeit einer erheblichen Gewichtsreduktion gegenüber dem gattungsgemäßen Stand der Technik die Möglichkeit einer beschleunigten Bewegung der drehbaren Komponenten der Siegelstation. Während bei dem vorbekannten Stand der Technik zumindest pro Siegelelement eine Siegelbacke gelenkig ausgebildet sein muss, um die beiden Siegelbacken eines einzelnen Siegelelementes in die Aufnahmestellung bzw. die Siegelstellung zu verbringen, können die Siegelbacken nach der erfindungsgemäßen Lösung im Wesentlichen starr mit den Wellen verbunden sein. Auch kann auf einen Motor zum Stellen der verschwenkbar gelagerten Siegelbacke verzichtet werden, ebenso wie eine dem Motor zugeordnete Steuerung, wie sie nach dem Stand der Technik. EP 231 für 79 B1 verwirklicht ist.

Insgesamt lässt die vorliegende Erfindung sich bei deutlicher Reduktion der drehbar gelagerten Teile gewichtssparender und konstruktiv einfacher herstellen. Dies gilt jedenfalls für die drehbar gelagerten Teile zum Erzeugen der Aufnahmestellung und der Siegelstellung bzw. zum Siegeln der Umhüllung bei gegeneinander liegenden Lagen der Umhüllung.

Im Hinblick auf eine weitere Vereinfachung der erfindungsgemäßen Vorrichtung wird gemäß einer bevorzugten Weiterbildung der vorliegenden Erfindung vorgeschlagen, dass die beiden Wellen über eine gemeinsame Antriebswelle angetrieben sind. Diese Weiterbildung bietet den weiteren Vorteil, dass durch Zwangskopplung oder Zwangsführung bei Betrieb der Antriebswelle die erste Welle eine vorbestimmte Abfolge relativ zu der zweiten Welle durchführt, was die Möglichkeit einer fehlerhaften Ansteuerung der beweglichen Elemente der Siegelstation vermindert und daher die Haltbarkeit und Zuverlässigkeit der erfindungsgemäßen Vorrichtung erhöht.

Gemäß der vorliegenden Erfindung sind die beiden Wellen über eine Zwangsführung gekoppelt. Dabei umfasst die Zwangsführung eine Schiebehülse, auf die noch nachstehend näher eingegangen wird. Die Schiebehülse ist verschieblich auf der ersten Welle gehalten und hat stirnseitig Formsschlusselemente, die mit zugeordneten Formschlussgegenelementen, die an der zweiten Welle ausgebildet sind, in Eingriff bringbar oder in Eingriff sind. Hierdurch wird die Schiebehülse verdrehfest mit der zweiten Welle gekoppelt. Dabei sind die Formschlusselemente und die Formschlussgegenelemente sowie die Verschieblichkeit der Schiebehülse bevorzugt so aufeinander abgestimmt, dass durch Längsverschiebung der Schiebehülse auch der Formschluss zwischen der Schiebehülse und der zweiten Welle aufgehoben werden kann, wenn die Formschlusselemente bzw. Formschlussgegenelemente außer Eingriff sind.

Bei einer bevorzugten Ausgestaltung der vorliegenden Erfindung haben die Formschlusselemente und die Formschlussgegenelemente bevorzugt einander zugeordnete Führungsflächen, die sich in axialer Richtung der Wellen erstrecken, wobei die Hülsenführung zwischen der Schiebehülse und der ersten Welle sich schräg zu der axialen Richtung der Welle erstreckende Führungsflächen aufweist. Bei einer Verschiebung der Schiebehülse in axialer Richtung ergibt sich bei dieser Gestaltung keine Relativbewegung zwischen der Schiebehülse und der zweiten Welle in Umfangsrichtung. Allerdings wird die Schiebehülse aufgrund der schräg ausgebildeten Hülsenführung relativ zu der ersten Welle verschwenkt. Durch diese Führungsflächen ergibt sich beim axialen Verschieben der Schiebehülse auch eine relative Verschiebung der ersten und der zweiten Welle zueinander in Umfangsrichtung.

Bei einer alternativen Ausgestaltung, die den gleichen Effekt bewirkt, sind die Führungsflächen von Formschlusselement und Formschlussgegenelement schräg zu einer axialen Richtung der Wellen erstreckend vorgesehen. Die Hülsenführung kann sich koaxial zu der axialen Richtung der Wellen oder schräg hierzu erstrecken. Die Schrägheit der jeweiligen Führungsflächen wird dabei entsprechend der gewünschten relativen Verschwenkbarkeit der Siegelbacken eines der Siegelelemente eingestellt.

Bei den beiden zuvor diskutierten Alternativen bewirkt jedenfalls eine axiale Relativbewegung zwischen der Schiebehülse und der zweiten Welle auch eine axiale Relativbewegung zu der ersten Welle. Die erste Welle und die zweite Welle sind bevorzugt in axialer Richtung mit vorbestimmtem Abstand positioniert. Die erste und die zweite Welle können beispielsweise jeweils Drehteller aufweisen, an denen die ihnen zugeordneten Siegelbacken im Wesentlichen starr befestigt sind. Der lichte Abstand der beiden Drehteller entspricht vorzugsweise dem Abstand in axialer Richtung der befestigungsseitigen Enden der entsprechenden Siegelbacken. Die Siegelbacken selbst können in axialer Richtung die Drehteller ein- oder beidseitig überragen oder aber zwischen diesen Drehtellern vorgesehen sein.

Gemäß einer bevorzugten Weiterbildung ist die Schiebehülse mit einem Antriebskranz versehen, der mit einer an der Antriebswelle drehfest montierten Führung zum axialen Verschieben der Schiebehülse zusammenwirkt. Diese an der Antriebswelle montierte Führung ist bevorzugt nach Art einer Kulissenführung vorgesehen, die den Antriebskranz beidseitig axiale umgreift und diesem Antriebskranz über die Bewegung der Antriebswelle und der Schiebehülse in Umfangsrichtung einen vorgegebenen axialen Weg relativ zu der zweiten Welle aufprägt. Dadurch ergibt sich ein fest vorgegebener Verschiebeweg der Schiebehülse zu jedem Drehwinkel der Antriebswelle.

Gemäß einer bevorzugten Weiterbildung der vorliegenden Erfindung ist die erste oder die zweite Welle ausschließlich in einer Vortriebsrichtung drehbar. Eine solche Weiterbildung kann beispielsweise dadurch erzielt werden, dass der ersten oder zweiten Welle eine Klinkenanordnung zugeordnet ist, die mit einer Klinkenverzahnung zusammenwirkt, die eine Drehung der entsprechenden Welle in einer Vortriebsrichtung erlaubt, die Drehung in der entgegengesetzten Richtung allerdings durch Sperrung der Verzahnung verhindert.

Gemäß einer weiteren bevorzugten Ausgestaltung der vorliegenden Erfindung ist die erste Welle über die zweite Welle angetrieben. Diese Zwangskopplung kann dabei entweder über die entsprechende Dimensionierung der Hülsenführung und der Formschlusselemente bzw. Formschlussgegenelemente erfolgen derart, dass in der geschlossenen Stellung die Siegelelemente das Drehmoment von der ersten Welle über die zweite Welle durch Endflächen der Führungen an der Schiebehülse übertragen wird.

Alternativ kann die Übertragung des Drehmomentes zum Antrieb der ersten Welle über die zweite Welle auch durch die aneinander liegenden Siegelbacken erfolgen. Mithin wird ein zum Vortrieb der einen durch die andere Welle angetriebenen Welle notwendiges Drehmoment über die aneinander liegenden Siegelbacken übertragen.

Gemäß einer bevorzugten Weiterbildung der vorliegenden Erfindung ist der Siegelstation eine Klemmeinrichtung zugeordnet, die relativ zu zumindest einer der Siegelbacken beweglich ist. Diese Klemmeinrichtung klemmt den Beutel zusammen mit dem Umhüllungsmaterial vor dem Schließen der Siegelbacken. Die Klemmeinrichtung kann beispielsweise in der Mitte einer U-förmigen Siegelbacke vorgesehen sein.

Wie im Stand der Technik kann die Umhüllung im Rahmen der vorliegenden Erfindung durch eine Folie gebildet sein, die eine aromadichte Verpackung um den Beutel bewirkt. Die Umhüllung kann aber aus anderem Material gebildet sein, welches einen gewissen Schutz des Beutels bewirkt, beispielsweise auch um den Beutel als Lebensmittel vor direkter Berührung durch Dritte zu schützen, bis die Umhüllung geöffnet und der Beutel entnommen wurde. So kann das Umhüllungsmaterial auch Papier, Gaze oder eine löchrige Folie sein.

Im Falle einer aus Kunststofffolie gebildeten Umhüllung kann das Siegeln durch Verschweißen der beiden Lagen des Umhüllungsmaterials gegeneinander erfolgen. Ein für sich nicht siegelfähiges, die Umhüllung ausbildendes Material kann mit einer siegelfähigen Beschichtung oder einem siegesfähigen Streifen dort versehen sein, wo das Schweißen zum Versiegeln stattfinden soll. Das Versiegeln kann aber auch durch Rändeln bzw. Prägen oder andere Fügetechniken zum Verbinden von zwei Lagen erfolgen.

Weitere Einzelheiten und Vorteile der vorliegenden Erfindung ergeben sich aus der nachfolgenden Beschreibung in Verbindung mit der Zeichnung. In dieser zeigen:
- Figur 1: eine Seitenansicht wesentlicher Teile eines Beispiels zur Herstellung eines umhüllten Beutels;
- Figur 2: die Seitenansicht nach Figur 1 in vergrößerter Darstellung;
- Figur 3: die in den Figuren 1 und 2 dargestellte Ausgangslage des Beispiels
- Figuren 4a-4n: in einer perspektivischen Seitenansicht; verschiedene Phasen beim Betrieb des Beispiels in Seitenansichten bzw. perspektivischen Seitenansichten gemäß den Figuren 2 und 3;
- Figur 5: eine perspektivische Seitenansicht eines Ausführungsbeispiels der Siegelstation gemäß der beanspruchten Erfindung in einer ersten Stellung;
- Figur 6: eine Seitenansicht der Siegelstation nach Figur 5 mit weiteren Details des Ausführungsbeispiels in einer zweiten Stellung und
- Figur 7: eine Seitenansicht nach Figur 7 in einer dritten Stellung.

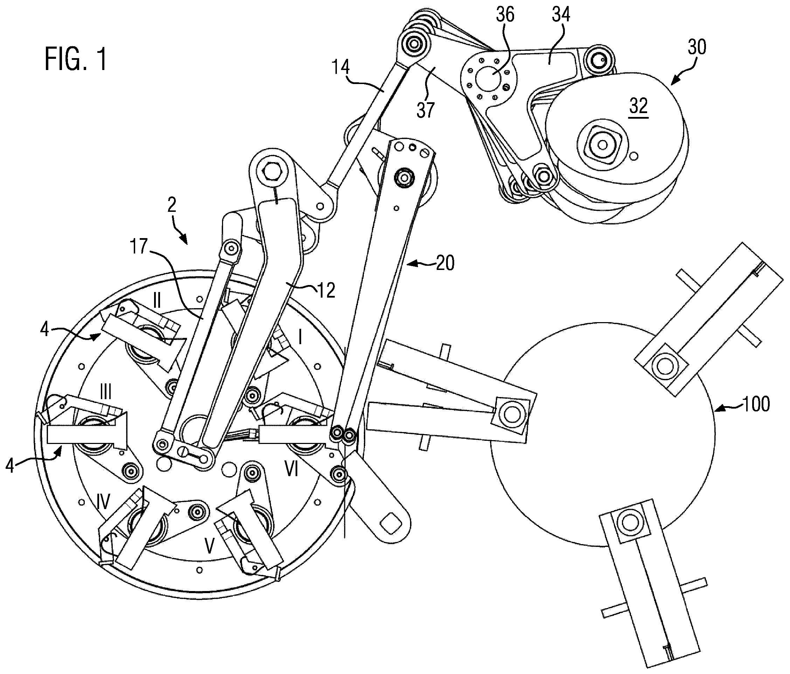

Das in Figur 1 gezeigte Beispiel hat eine mit Bezugszeichen 2 gekennzeichnete Beutelherstellungseinrichtung und eine mit Bezugszeichen 100 gekennzeichnete Siegelstation.

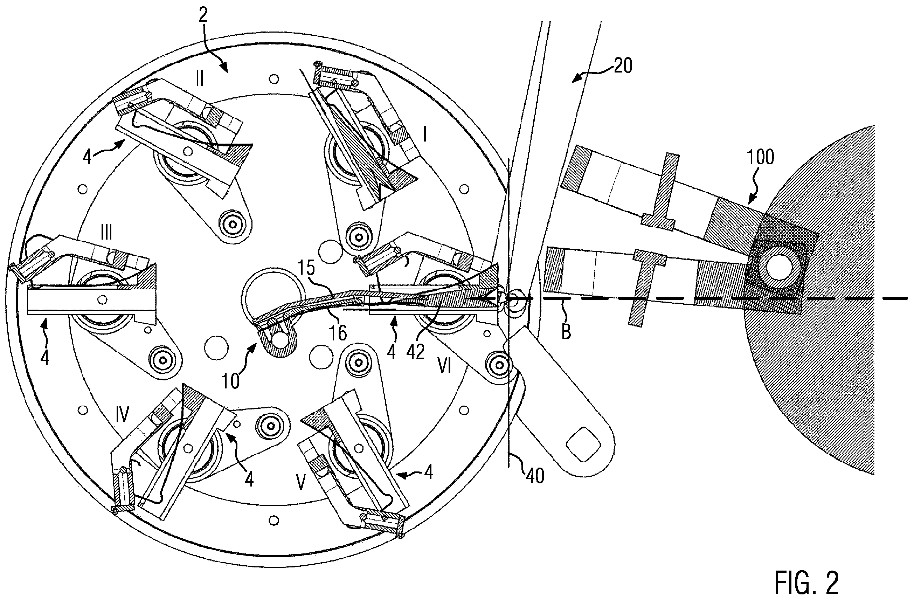

Die Beutelherstellungseinrichtung 2 umfasst ein Karussell mit mehreren um eine Achse drehenden Aufnahmen 4 zum Aufnehmen einer wasserdurchlässigen Umhüllung, die zur Ausbildung des Beutels ein brühfähiges Material enthaltend umgeformt und üblicherweise mit einem Faden und einem Etikett verbunden wird. Bezüglich der einzelnen Stationen und deren Ausgestaltung kann auf den Stand der Technik verwiesen werden, so beispielsweise EP 2 231 479 B1 oder WO 01/62600 A1. Mit den Bezugszeichen I bis VI sind dabei in Figur 2 verschiedene Positionen gekennzeichnet, in denen sich die Aufnahme 4 befinden kann, um die unterschiedlichen Komponenten des fertig hergestellten bzw. fertigzustellenden Beutels zu empfangen und zu verarbeiten. Hierbei einwirkende Elemente sind aus Gründen einer klaren Darstellung nicht gezeigt. In Position VI ist der Beutel fertiggestellt.

Die Figuren 1 bis 3 zeigen Elemente einer mit Bezugszeichen 10 gekennzeichneten Beutelhandhabungseinrichtung und einer mit Bezugszeichen 20 gekennzeichneten Umhüllungsmaterialhandhabungseinrichtung. Bei dem Umhüllungsmaterial des gezeigten Beispiels handelt es sich um eine aromadichte Folie. So wird in der nachstehenden Beschreibung auf eine Folienhandhabungseinrichtung 20 abgestellt. Die Beutelhandhabungseinrichtung 10 umfasst zwei sich in etwa parallel erstreckende Arme 12, 13, die gelenkig miteinander verbunden sind und über Koppelstangen 14 mit einer gemeinsamen Antriebseinrichtung 30 gekoppelt sind. Diese gemeinsame Antriebseinrichtung 30 hat verschiedene Kurvenscheiben 32, die verdrehfest auf einer gemeinsamen Antriebswelle 33 der Antriebseinrichtung 30 befestigt sind und mit Abnehmern 34 gekoppelt sind, in denen die Außenumfangsflächen der Kurvenscheiben 32 jeweils abrollen, wobei die Abnehmer 34 für sich jeweils auf einer gemeinsamen Lagerachse 36 verschwenkbar gelagert und mit einem Hebel 37 versehen sind, der gelenkig mit der zugehörigen Koppelstange 14 verbunden ist. Die Koppelstangen 14 wirken über Hebel auf die Arme 12 ein.

Die Antriebswelle 30 betätigt sowohl die einzelnen Komponenten der Beutelhandhabungseinrichtung 10 wie auch die Komponenten der Folienhandhabungseinrichtung 20. So sind beide Handhabungseinrichtungen 10, 20 mit einem gemeinsamen Antrieb versehen und zwangssynchronisiert.

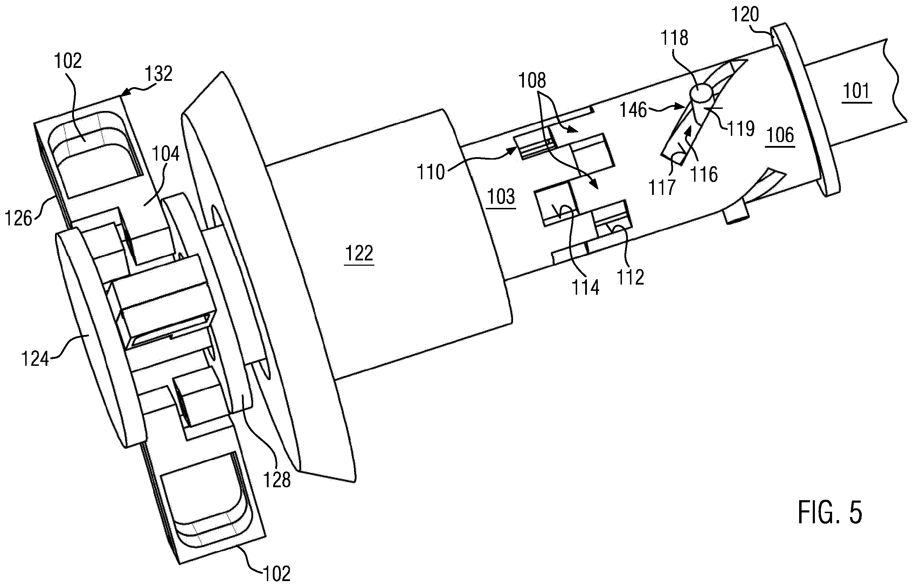

Der Siegelstation 100 sind erste Siegelbacken 102 und zweite Siegelbacken 104 zugeordnet. Details der Siegelstation werden unter Bezugnahme auf die Figuren 5 bis 7 erläutert werden. Für die nachfolgende Beschreibung unter Bezugnahme auf die Figuren 1 bis 4 ist die Funktion der Siegelbacken 102, 104 lediglich insoweit relevant, als dass die beiden Siegelbacken 102, 104 zum Einsiegeln des Beutels in einer Folienumhüllung relativ zueinander bewegt und gegeneinander angelegt werden können und in entgegengesetzter Richtung verschwenkt werden können, um den eingesiegelten Beutel freizugeben bzw. einen neuen Beutel mit der Folie aufzunehmen, wobei die paarweise vorgesehenen Siegelbacken 102, 104 um eine gemeinsame Achse verschwenkbar sind. In den Figuren 1 bis 4 ist die Siegelstation 100 lediglich schematisch dargestellt. Die tatsächliche Ausgestaltung der Ausführungsform weicht indes davon ab und ist den Figuren 5 bis 7 zu entnehmen.

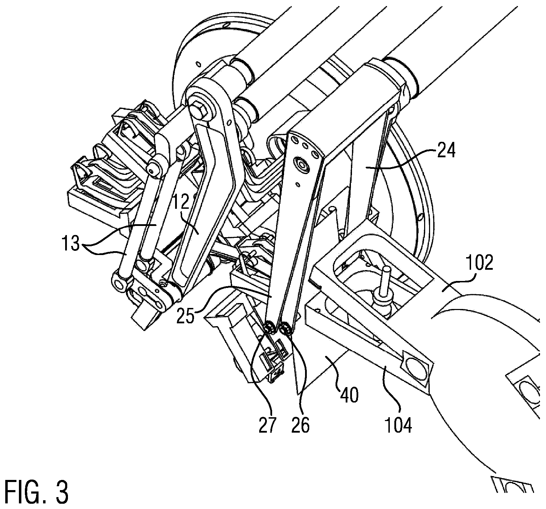

Wie Figur 3 verdeutlicht, weist die Folienhandhabungseinrichtung 20 ein mit Bezugszeichen 21 gekennzeichnetes vorlaufendes Folienhandhabungselement und ein mit Bezugszeichen 22 gekennzeichnetes nachlaufendes Folienhandhabungselement auf, wobei jedes der Elemente 21, 22 jeweils paarweise vorgesehene Folienhandhabungsarme 24 bzw. 25 aufweist, wobei jedes Paar verschwenkbar gelagert und unabhängig voneinander antreibbar sind und jeweils für sich nach innen vorspringende Klemmvorsprünge aufweisen, wobei der Klemmvorsprung der vorlaufenden Handhabungsarme 24 mit Bezugszeichen 26 und der nachlaufenden Handhabungsarme 25 mit Bezugszeichen 27 versehen sind.

Die Arme der Beutelhandhabungseinrichtung 10 sind als vorderer Beutelhandhabungsarm 12 ausgebildet, der einen Klemmschuh 15 trägt, und als hinterer Beutelhandhabungsarm 13, der eine mit dem Klemmschuh 15 zusammenwirkende Klemmfeder 16 betätigt, die relativ zu dem Klemmschuh 15 verschwenkbar ist. Diese Elemente sind in den Figuren 5 ff. im Detail beschrieben. Ein weiterer Betätigungsarm 17 verschwenkt den Klemmschuh 15 relativ zu dem vorderen Beutelhandhabungsarm 12.

Die Figur 3 zeigt eine tangential in Bezug auf die Drehachsen der Beutelherstellungseinrichtung 2 und der Siegelstation 100 als ebene Bahn zugeführtes Umhüllungsmaterial 40 in Form einer Folie, die in der Phase nach Figur 3 zwischen dem vorlaufenden Klemmvorsprung 26 und dem nachlaufenden Klemmvorsprung 27 durch relative Schwenkbewegung der beiden Handhabungsarme 24, 25 relativ zueinander geklemmt ist. Diese Position stellt die Ausgangsposition für das Einführen der Folie 40 zwischen die beiden Siegelbacken 102, 104 dar. Sie ist in entsprechender Weise in Figur 2 dargestellt, wobei in dieser Figur ein zwischen die Siegelbacken 102, 104 zu verbringender Beutel mit Bezugszeichen 42 gekennzeichnet ist. Die Arme 12, 13, 17 sind aus Darstellungsgründen weggelassen.

Ersichtlich wird die Folie 40 zwischen den beiden vorlaufenden und nachlaufenden Klemmvorsprüngen 26, 27 in ihrem mittleren Bereich geklemmt und gegriffen. In dieser Phase sind der Klemmschuh 15 mit der Klemmfeder 16 in die zugehörige Aufnahme 4 zum Umgreifen des Beutels 42 eingeführt. Die beiden Siegelbacken 102, 104 schließen eine mit Bezugszeichen B gekennzeichnete Bewegungsbahn von Folie 40 und Beutel 42 noch nicht zwischen sich ein. Tatsächlich befinden sich die beiden Siegelbacken 102, 104 oberhalb dieser Bewegungsbahn B. Diese Bewegungsbahn B verläuft im Wesentlichen als Radiallinie, die den Drehpunkt des Karussells der Beutelherstellungseinrichtung 2 schneidet. Die Bewegungsbahn B erstreckt sich geradlinig zwischen der Beutelherstellungseinrichtung 2 und der Siegelstation 10.

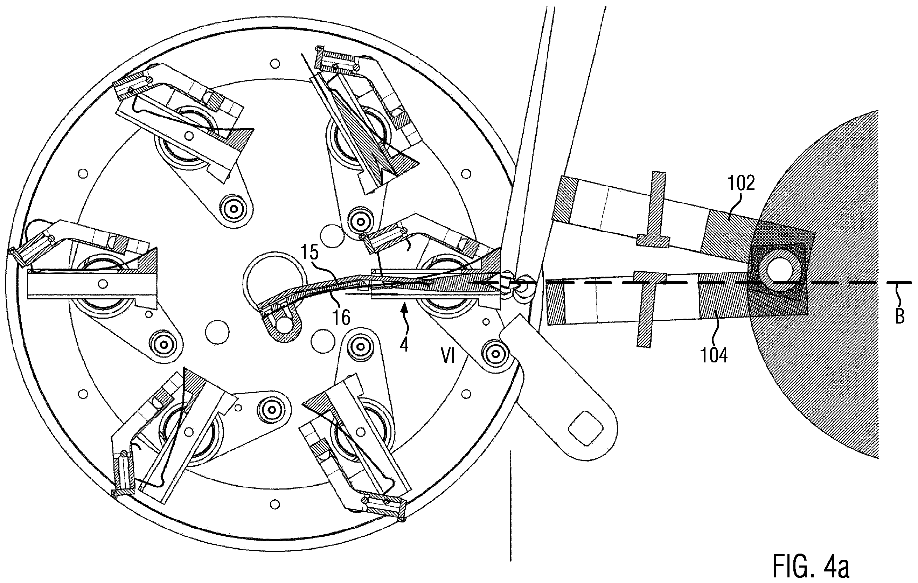

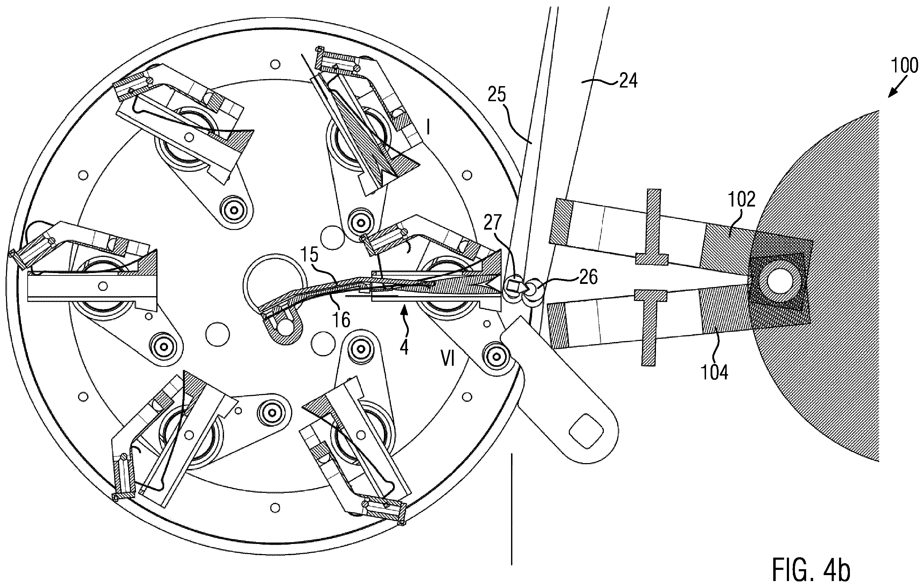

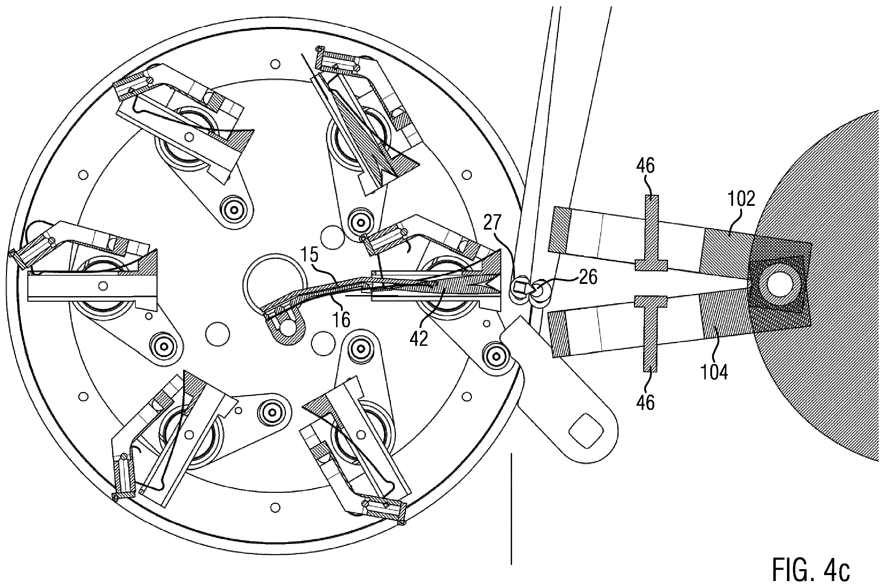

In der in Figur 4a gezeigten Phase sind die beiden Handhabungsarme 24, 25 bereits in Richtung auf die Siegelstation 100 unter Mitnahme der Folie 40 verschwenkt worden. In einem geringeren Maße sind der Klemmschuh 15 und die Klemmfeder 16 in die Aufnahme 4 vorgetrieben worden. In der Sequenz zwischen Figur 4b und 4a wurde die Klemmfeder 16 zur Klemmung des Beutels 42 zwischen dem Klemmschuh 15 und der Klemmfeder 16 verschwenkt, während der Klemmschuh in der Aufnahme verharrt. Das Karussell der Beutelherstellungseinrichtung 2 verbleibt ortsfest. Entsprechendes ergibt sich für Figur 4c, die deutlich im Vergleich zu Figur 4b erkennen lässt, dass die Folie 40 bereits eine bestimmte Strecke auf der Bewegungsbahn B in Richtung auf die Siegelstation 100 vorangeschritten ist, wohingegen der Beutel 42 weiterhin in seiner Aufnahme 4 verharrt. Die Folie 40 läuft dementsprechend dem Beutel 42 voraus.

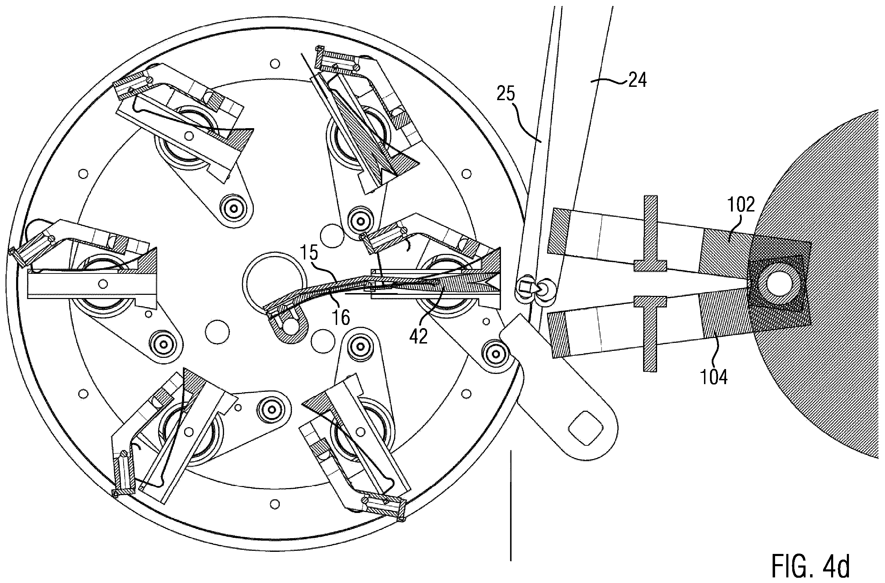

Erst in der Darstellung gemäß Figur 4d werden beide Komponenten der herzustellenden Verpackungseinheit bestehend aus Folie 40 und Beutel 42 zeitgleich zwischen die Siegelbacken 102, 104 bewegt. Diese schließen mittlerweile die Bewegungsbahn B zwischen sich ein. Figur 4a zeigt den Beginn der Bewegung des Beutels 42 auf der Bewegungsbahn B.

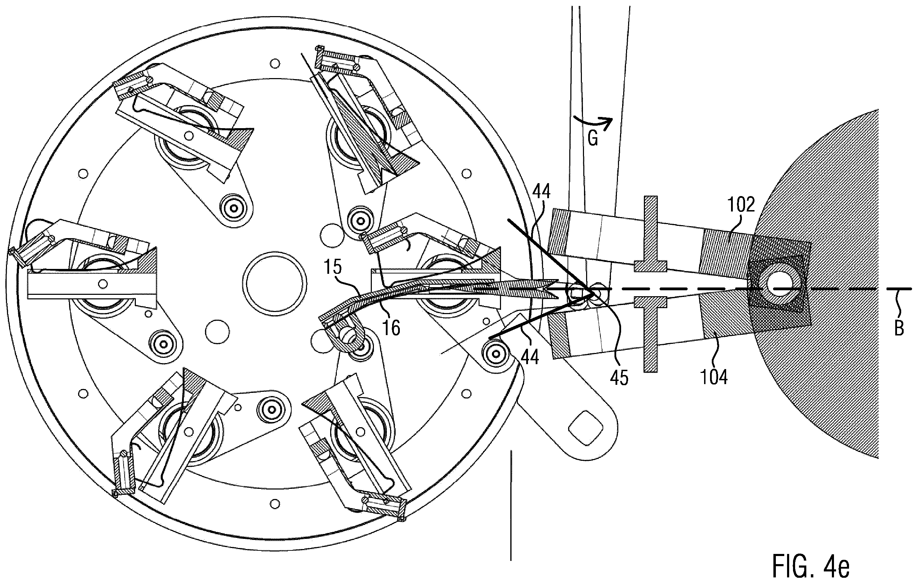

Wie aus Figur 4e erkennbar wurde die Folie 40 U-förmig eingeschlagen, wodurch zwei sich gegenüberliegende Schenkel 44 der Folie 40 zwischen einer Falz 45 gebildet sind, die mit zunehmender Annäherung, d.h. Einbringbewegung der Folie 40 und des Beutels 42 zwischen die Siegelbacken 102, 104 zunehmend dem Beutel 42 angenähert werden. Die Klemmfeder 16 hat den Beutel 42 freigegeben. Eine die Folie 40 beim Greifen durch die Folienhandhabungseinrichtung 20 randseitig haltende, in der Zeichnung nicht gezeigte Führung, die sich tangential zu der Beutelherstellungseinrichtung 2 erstreckt, ist mittig ausgespart, so dass die Klemmvorsprünge 26, 27 die Folie 40 greifen können. Die Führung hält ferner sich trichterförmig in Richtung auf die Siegelstation 100 verjüngende Formelemente, die mit der Folie 40 zusammenwirken, um die sich gegenüberliegenden Schenkel 44 um die Falz 45 zu verschwenken.

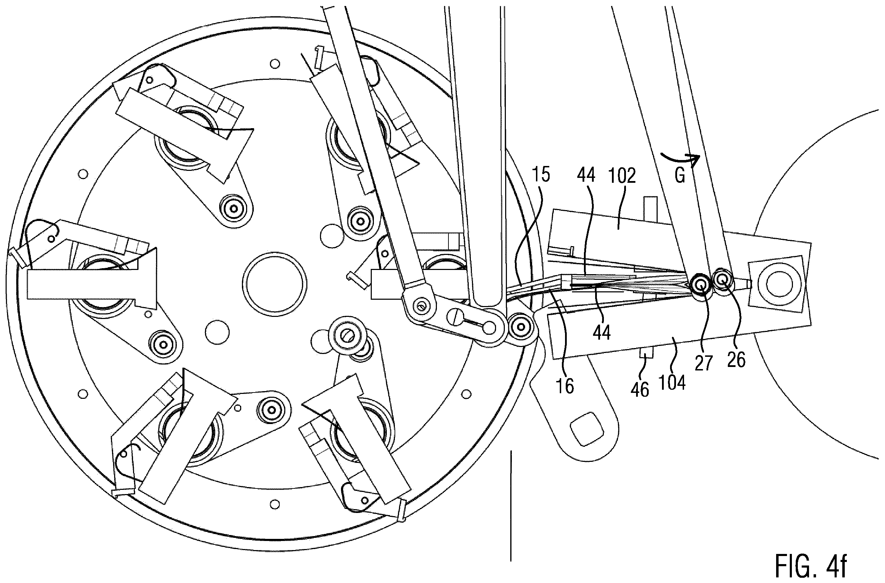

Die Figur 4f zeigt die Endlage der Beutelhandhabungseinrichtung 10 und der Folienhandhabungseinrichtung 20. In der Figur 4f gezeigten Stellung sind Folie 40 und Beutel 42 in ihre Siegellage zwischen die beiden Siegelbacken 102, 104 verbracht worden.

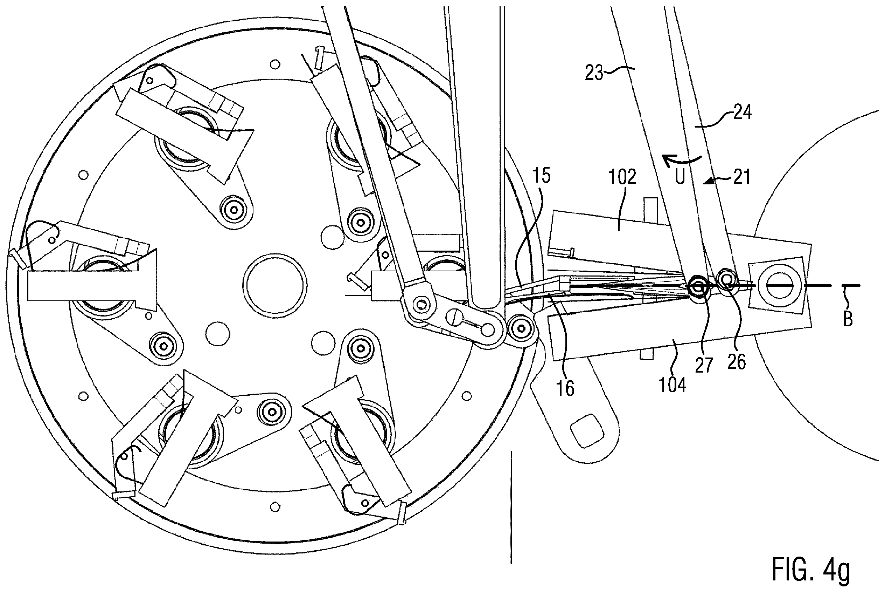

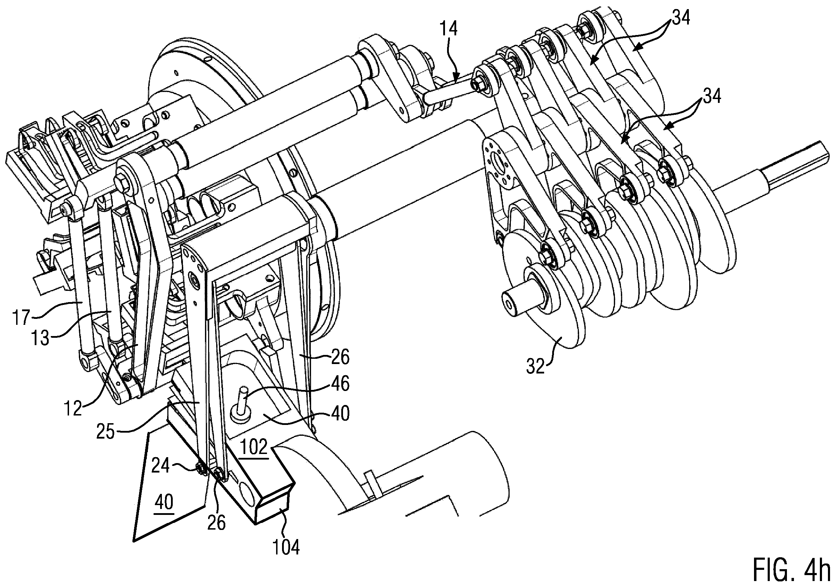

Nun wird die Beutelhandhabungseinrichtung 10 in entgegengesetzter Richtung verschwenkt, d.h. gemäß der Darstellung nach Figur 4g im Uhrzeigersinn U. Das vorlaufende Folienhandhabungselement 21 verbleibt ortsfest, wohingegen das nachlaufende Folienhandhabungselement 22 wie die Beutelhandhabungseinrichtung 10 im Uhrzeigersinn verschwenkt wird, um den nachlaufenden Klemmvorsprung 27 aus dem Bereich zwischen den Siegelbacken 102, 104 zu entfernen. In etwa zeitgleich greift eine insbesondere in Figur 4h deutlich zu erkennendes Klemmeinrichtung 46, welche zu jeder der Siegelbacken 102, 104 vorgesehen ist, von außen gegen die Schenkel 44 und klemmt die Folie 40 und den Beutel 42 in dem Maße, wie sich der Klemmschuh 15 und die Klemmfeder 16, die zuvor zur Lösung der Klemmung der Folie 40 und des Beutels 42 betätigt worden ist, aus den Siegelbacken 102, 104 entfernen. Damit erfolgt die Sicherung von Folie 40 und Beutel 42 durch die Klemmeinrichtung 46. Die Klemmeinrichtung 46 ist vorliegend in Form eines Klemmstempels ausgebildet, der relativ beweglich, beispielsweise verschwenkbar zu der zugeordneten Siegelbacke 102, 104 vorgesehen ist.

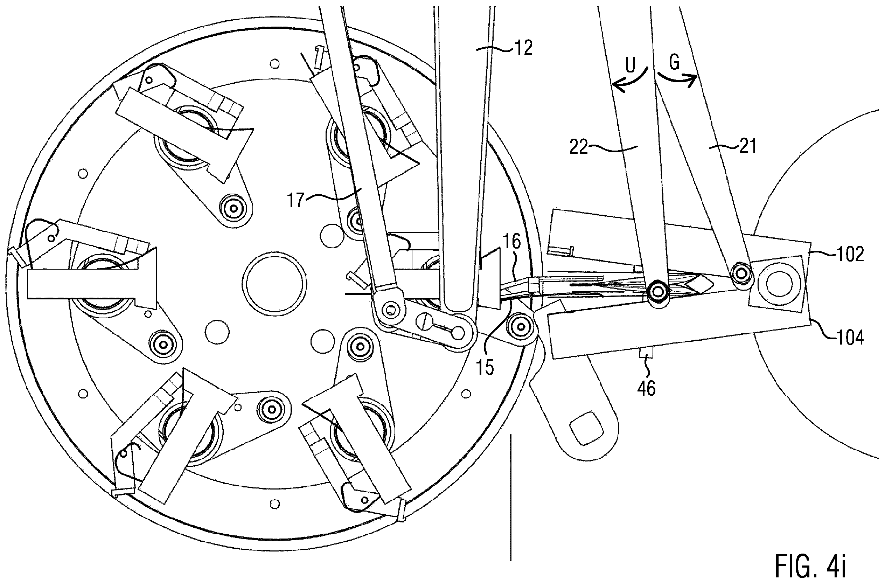

Nachdem Klemmschuh 15 und Klemmfeder 16 den Beutel 42 und die vorlaufenden und nachlaufenden Klemmvorsprünge 26, 27 die Folie 40 freigegeben haben, erfolgt die Halterung von Folie 40 und Beutel 42 zwischen den Siegelbacken 102, 104 allein durch die Klemmeinrichtung 46, was mit Figur 4i verdeutlicht ist. Mit zunehmender Verschwenkbewegung des nachlaufenden Folienhandhabungselementes 22 wird das vorlaufende Folienhandhabungselement 21 im Gegenuhrzeigersinn G verschwenkt und damit aus dem Bereich der Siegelbacken 102, 104 herausgeführt, die in ihrem hinteren Bereich schmaler ausgebildet sind, sodass die vorlaufenden Klemmvorsprünge 26 des vorlaufenden Folienhandhabungselementes 21 durch diese Verschwenkbewegung aus dem Bereich zwischen den Siegelbacken 102, 104 herausgeführt werden können.

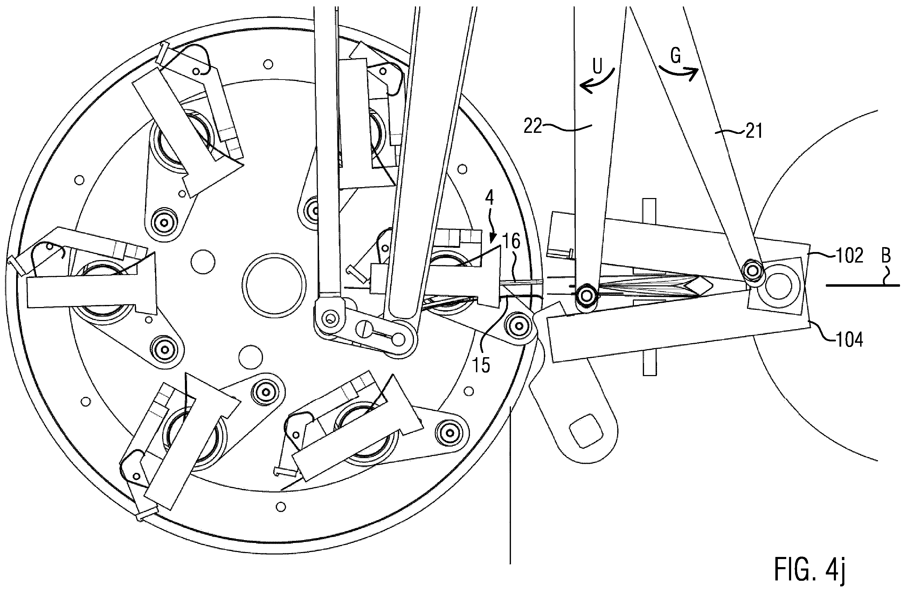

Durch relatives Verschwenken der vorderen und hinteren Beutelhandhabungsarme 12, 13 ergibt sich beim Zurückschwenken von Klemmschuh 15 und Klemmfeder 16 eine Lage unterhalb der Aufnahme 4 in Position VI. Mit anderen Worten werden der Klemmschuh 15 und die Klemmfeder 16 nicht auf der Bewegungsbahn B zurückgeführt (vgl. Figur 4j).

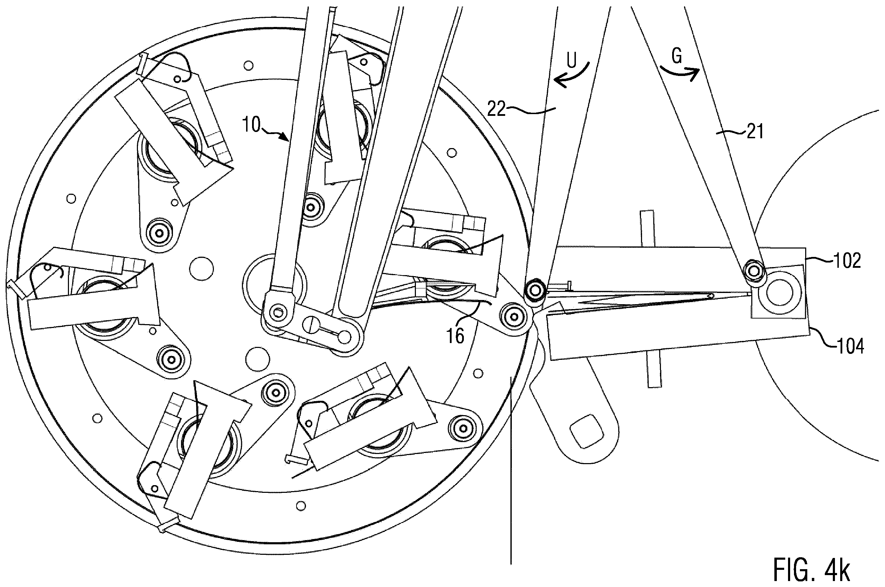

In Figur 4k wurden die beiden Siegelbacken 102, 104 bereits aufeinander zu geschwenkt. Dementsprechend ist der Abstand zwischen den beiden Siegelbacken 102, 104 kleiner als in der Darstellung nach Figur 4j.

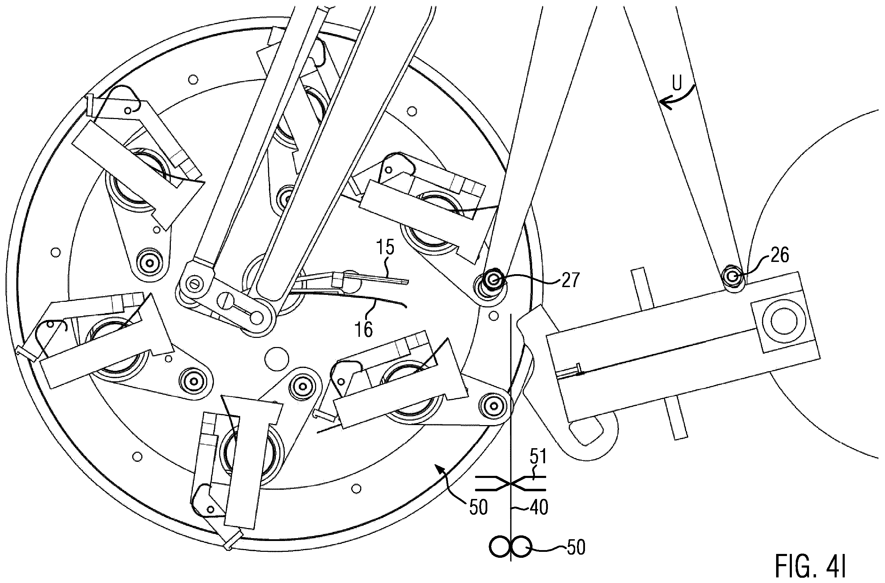

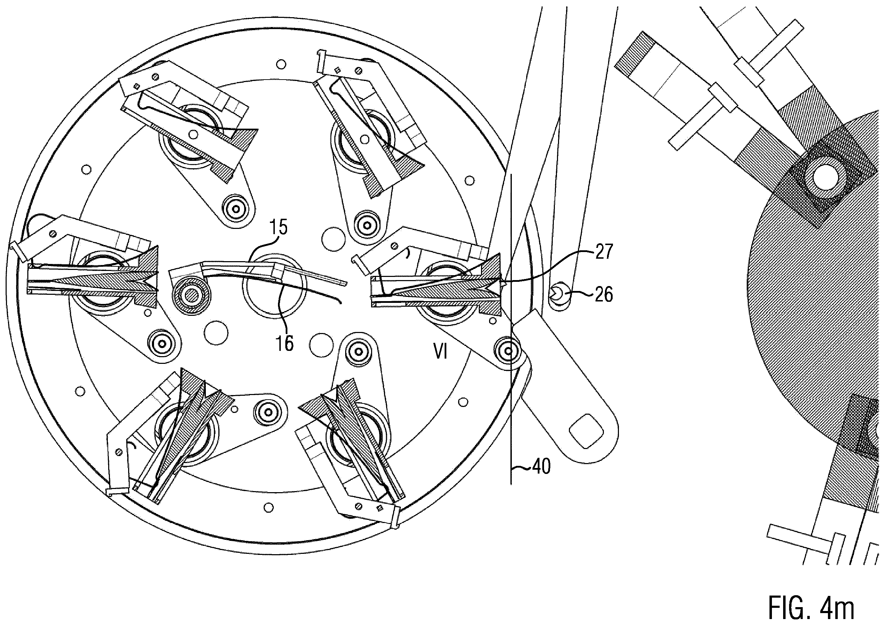

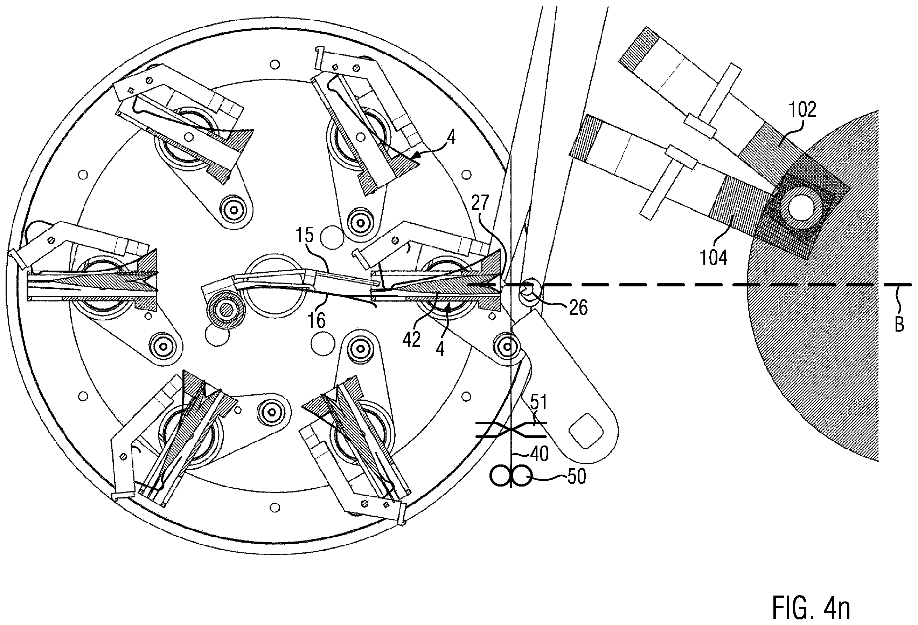

Zwischen den Figuren 4k und 4l wurden sowohl das Karussell der Beutelherstellungseinrichtung 2 wie auch die Siegelstation 100 im Gegenuhrzeigersinn verschwenkt. Die Siegelbacken 102, 104 werden im Rahmen dieser Drehbewegung vollständig aufeinander zubewegt. Nach Verbringen der Siegelbacken 102, 104 in die in Figur 4l gezeigte Siegelposition werden die Klemmeinrichtungen 46 gelöst. In der Siegelposition sind die den Beutel 42 seitlich und stirnseitig überragenden Ränder der Folie 40 zwischen den Siegelbacken 102, 104 geklemmt und werden vorliegend durch Wärmeeinwirkung miteinander verschweißt. Während die Siegelstation 100 gedreht wird, wird durch eine schematisch in den Figuren I und n durch zwei die Folie 40 klemmende und vorschiebende Antriebsrollen dargestellte Folienzufuhreinrichtung 50, denen eine schematisch dargestellte Schneideinrichtung 51 zugeordnet ist, eine neue Folie 40 zwischen den vorlaufenden Klemmvorsprung 26 und den nachlaufenden Klemmvorsprung 27 verbracht (vgl. Figuren 4l, 4m). Durch Drehen des Karussells der Beutelherstellungseinrichtung 2 wurde die in Uhrzeigersinn nächste Aufnahme 4 in die Position VI verbracht. Figur 4n zeigt bereits die Annäherung der offenen Klemmfeder 16 mit dem Klemmschuh 15 in Richtung auf den Beutel 42 und die Annäherung der vorlaufenden und nachlaufenden Klemmvorsprünge 26, 27 zur Klemmung eines mittleren Bereichs der Folie 40, der sich auf der Bewegungsbahn B befindet. Währenddessen dreht die Siegelstation 100 und bringt einen weiteren Satz von ersten und zweiten Siegelbacken 102, 104 zum Einschluss der Bewegungsbahn B und dementsprechend gegenüberliegend zu der Aufnahme 4. Der zuvor beschriebene Zyklus beginnt von neuem. Die Schneideinrichtung 51 trennt ein Längenstück der Folie 40 von einem Vorrat ab, wenn die Klemmvorsprünge 26, 27 die Folie 40 greifen.

Nachstehend wird das Ausführungsbeispiel der Siegelstation 100 gemäß der Ausgestaltung der vorliegenden Erfindung näher unter Bezugnahme auf die Figuren 5 ff. erläutert.

Figur 5 zeigt eine perspektivische Seitenansicht des Ausführungsbeispiels, das eine erste Welle 101, die einer ersten Siegelbacke 102 zugeordnet ist, und eine koaxial zu der ersten Welle 101 vorgesehene zweite Welle 103 umfasst, die der zweiten Siegelbacke 104 zugeordnet ist. Verschieblich auf der ersten Welle 101 ist eine Schiebehülse 106 vorgesehen, die über Formschlusselemente 108 mit zugeordneten Formschlussgegenelementen 110, die an einem stirnseitigen Ende der zweiten Welle 103 vorgesehen sind, im Eingriff ist.

Die Formschlusselemente 108 bilden sich in rein axialer Richtung in Bezug auf die Wellen 101, 103 erstreckende Führungsflächen 112 aus. Korrespondierend hierzu bildet die zweite Welle 103 mit ihren Formschlussgegenelementen 110 entsprechende Führungsflächen 114 aus.

Die Schiebehülse 106 hat einen ihre Umfangsfläche durchsetzenden Schrägschlitz 116, der sich relativ zu der axialen Erstreckung der ersten bzw. zweiten Welle 101, 103 schräg erstreckt, eine entsprechend schräg ausgebildete Führungsfläche 117 ausformt und von einem Führungszapfen 118 durchsetzt ist, der in dem Führungsschlitz 116 gehalten ist und mit seiner Außenumfangsfläche eine weitere Führungsfläche 119 ausformt, die mit der Führungsfläche 117 zusammenwirkt.

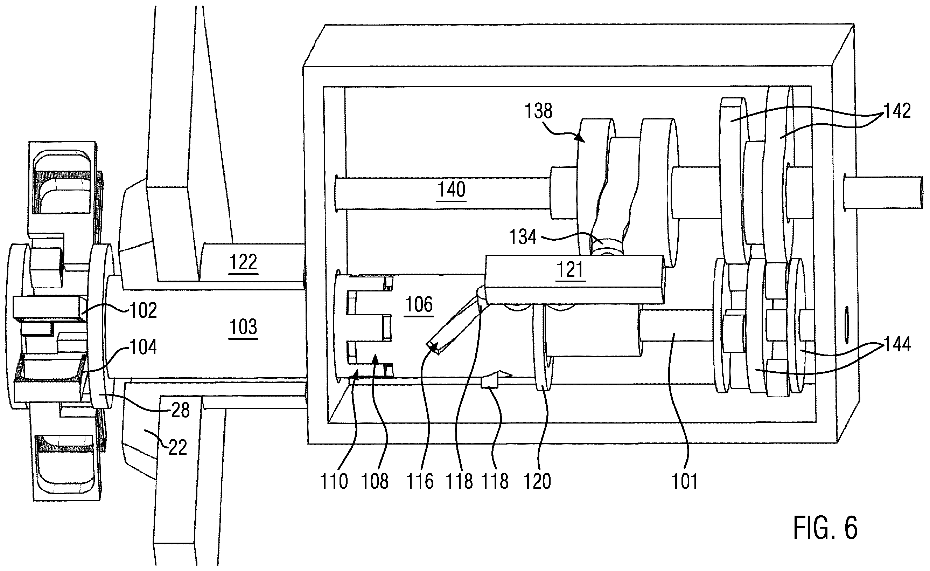

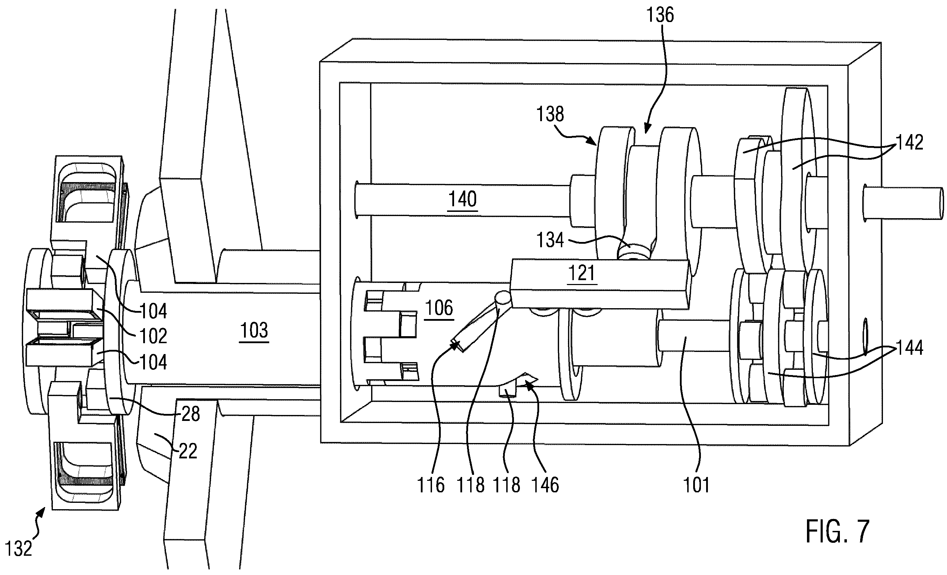

An seinem dem Formschlusselement 108 gegenüberliegenden Ende hat die Schiebehülse 106 einen Antriebskranz 120, der mit einem in den Figuren 6 und 7 gezeigten Schieber 121 zusammenwirkt, dessen Betrieb nachstehend noch näher erläutert wird.

Die erste und die zweite Welle 101, 103 durchsetzen jeweils eine Lagerhülse 122 zur Lagerung der Wellen 101, 103 an einem Getriebegehäuse 123. Die erste Welle 101 weist an ihrem freien Ende einen ersten Drehteller 124 auf, auf dessen Außenumfang mit gleichmäßigem Abstand zueinander mehrere der ersten Siegelbacken 102 montiert sind. Die ersten Siegelbacken 102 sind im wesentlichen verdrehfest an dem ersten Drehteller 124 montiert.

In entsprechender Weise weist die zweite Welle 103 einen zweiten Drehteller 128 auf, an dem mehrere der zweiten Siegelbacken 104 verdrehfest montiert sind. Dazu sind die zweiten Siegelbacken 104 gegenüber dem zweiten Drehteller 128 verschraubt. Durch Lösen der Verschraubung kann die Ausrichtung der jeweils zweiten Siegelbacke 104 relativ zu dem zweiten Drehteller 128 angepasst eingestellt werden. Dadurch lässt sich das Ausführungsbeispiel einstellen, sodass bei einer in Figur 5 gezeigten Siegelposition sämtliche erste Siegelbacken 102 an den zugeordneten zweiten Siegelbacken 104 anliegen, um die dazwischen vorgesehene und eine die Folienverpackung bildende Folie 40 zu klemmen und über eine U-förmig ausgebildete Naht zu siegeln.

Die Siegelbacken 102, 104 sind vorliegend Schweißbacken, die durch eine innerhalb der Siegelbacken 102, 104 vorgesehene Heizung erwärmt sind und bilden ein Siegelement 132 aus.

Wie den Figuren 6 und 7 zu entnehmen ist, wirkt der Schieber 121 über eine Führungsrolle 134 mit einer als Nut 136 ausgesparten Kulissenführung zusammen, die an einem Führungszylinder 138 vorgesehen ist. Der Führungszylinder 138 ist verdrehfest mit einer Antriebswelle 140 verbunden, die auch zwei Nockenscheiben 142 drehend antreibt, deren Nocken zum schrittweisen Antrieb der ersten und der zweiten Welle 101, 103 in Ausnehmungen von Abtriebsscheiben 144 eingreifen.

So wird die Antriebswelle 140 kontinuierlich bewegt, wohingegen die Wellen 101, 103 einerseits relativ zueinander und insgesamt schrittweise um eine gemeinsame Drehachse gedreht werden.

Zwischen den ersten und zweiten Siegelbacken 102, 104 kann ein Vorspannmittel wirken, um die entsprechenden Siegelbacken 102, 104 unter elastischer Vorspannung und Zwischenlage der Folie 40 gegeneinander anzulegen. Durch dieses elastische Mittel werden etwaige Toleranzfehler ausgeglichen. Das elastische Mittel kann beispielsweise zumindest eine der Siegelbacken 102, 104 elastisch abstützen. Alternativ kann auch beispielsweise die zweite Welle 103 aus einem torsionselastischen Material gebildet sein.

In den Figuren 5 bis 7 wurde auf die Darstellung der gesonderten Klemmeinrichtung 46 verzichtet.

Bei der gewählten Antriebsart wird die erste Welle 101 unmittelbar über die Abtriebsscheiben 144 angetrieben, während der Antrieb der Schiebehülse 106 durch Zusammenwirken des Führungszapfens 118 mit dem Schrägschlitz 116 und aufgrund der Stellung der Hülse 106 über den Schieber 121 erfolgt. Durch die Entkopplung der Antriebsbewegung der Antriebswelle 140 aufgrund einerseits der Nockenscheiben 142 und andererseits des Führungszylinders 138 kann sich eine Relativbewegung der Siegelbacken 102, 104 auch bei stehender erster Welle 101 ergeben. Die Sequenz zwischen dem Einbringen der Folie 40 zusammen mit dem Beutel 42, dem Schließen der beiden Siegelbacken 102, 104 und dem Einsiegeln des Beutels 42 zwischen die Folie 40 ergibt sich aus der Sequenz der Figuren 6, 7 und 5.

Zwischen den Figuren 6 und 7 wird bei stehender erster Welle 101 und Relativbewegung der Schiebehülse 106 die Siegelposition vorbereitet. Die Siegelbacken 102, 104 werden gegeneinander angelegt. Dabei verbleibt die erste Siegelbacke 102 ortsfest, wohingegen die zweite Siegelbacke 104 durch Betätigen der Schiebehülse 106 verschwenkt wird. Nach Anlage der beiden Siegelbacken 102, 104 gegeneinander verschwenken die erste und die zweite Welle 101, 103 zeitgleich. Dabei bleibt die Lage der Schiebehülse 106 relativ zu der zweiten Welle 103 unverändert. Der verdrehfest mit der ersten Welle 101 verbundene Führungszapfen 118 nimmt die Schiebehülse 106 mit, sodass auch die zweiten Siegelbacken 104 verschwenkt werden.

Der Schrägschlitz 116 und der Führungszapfen 118 bilden dabei eine Schrägführung 146 aus, die eine Zwangsführung verwirklicht, welche die beiden Wellen 101, 103 mit fest vorgegebener Kinematik miteinander koppelt.

Alternativ zu dem gezeigten Ausführungsbeispiel kann auch der zweiten Welle 103 ein Antrieb mit Nockenscheiben und Abtriebsscheiben zugeordnet sein, wie er bei dem gezeigten Ausführungsbeispiel für die erste Welle 101 verwirklicht ist. Auch hierdurch lässt sich ein eigenständiger und durch die Drehung der Antriebswelle 140 vorgegebener Antrieb für die zweiten Siegelbacken 104 verwirklichen. Aber auch bei dieser Zwangsführung sind die ersten und die zweiten Siegelbacken 102, 104 allein über die Antriebswelle 140 angetrieben und zwangsgekoppelt.

### Bezugszeichenliste

- 2: Beutelherstellungseinrichtung
- 4: Aufnahme
- 10: Beutelhandhabungseinrichtung
- 12: vorderer Beutelhandhabungsarm
- 13: hinterer Beutelhandhabungsarm
- 14: Koppelstange
- 15: Klemmschuh
- 16: Klemmfeder
- 17: Betätigungsarm
- 20: Folienhandhabungseinrichtung
- 21: vorlaufendes Folienhandhabungselement
- 22: nachlaufendes Folienhandhabungselement
- 24: vorlaufendes Handhabungsarm
- 25: nachlaufendes Handhabungsarm
- 26: vorlaufender Klemmvorsprung
- 27: nachlaufender Klemmvorsprung
- 30: Antriebseinrichtung
- 32: Kurvenscheibe
- 33: Antriebswelle
- 34: Abnehmer
- 36: Lagerachse
- 37: Hebel
- 40: Folie
- 42: Beutel
- 44: Schenkel
- 45: Falz
- 46: Klemmeinrichtung
- 50: Folienzufuhreinrichtung
- 51: Schneideinrichtung
- B: Bewegungsbahn
- U: Verschwenken im Uhrzeigersinn
- G: Verschwenken im Gegenuhrzeigersinn
- I-VI: Position der Aufnahme 4
- 100: Siegelstation
- 101: erste Welle
- 102: erste Siegelbacke
- 103: zweite Welle
- 104: zweite Siegelbacke
- 106: Schiebehülse
- 108: Formschlusselemente
- 110: Formschlussgegenelemente
- 112: Führungsfläche
- 114: Führungsfläche
- 116: Schrägschlitz
- 117: Führungsfläche des Schrägschlitzes
- 118: Führungszapfen
- 119: Führungsfläche des Führungszapfens
- 120: Antriebskranz
- 121: Schieber
- 122: Lagerhülse
- 123: Getriebegehäuse
- 124: erster Drehteller
- 128: zweiter Drehteller
- 132: Siegelelement
- 134: Führungsrolle
- 136: Nut
- 138: Führungszylinder
- 140: Antriebswelle
- 142: Nockenscheibe
- 144: Abtriebsscheibe
- 146: Schrägführung

## Patentansprüche

1. Vorrichtung zum Herstellen eines in einer Umhüllung versehenen, ein brühfähiges Material enthaltenden Beutels mit einer Beutelherstellungseinrichtung (2), die dazu eingerichtet ist, einen Beutel (42) enthaltend brühfähiges Material in einer wasserdurchlässigen Umhüllung herzustellen, und mit einer Siegelstation mit zwei relativ zueinander beweglichen Siegelbacken (102; 104) zum Einsiegeln des Beutels (42) in einer durch ein Umhüllungsmaterial (40) gebildeten Umhüllung,
**dadurch gekennzeichnet,**
**dass** die Siegelstation (100) eine erste Welle (101), die zumindest eine erste Siegelbacke (102) trägt, und eine zweite Welle (103), die zumindest eine zweite, mit der ersten Siegelbacke (102) beim Einsiegeln der Umhüllung zusammenwirkende Siegelbacke (104) trägt, umfasst, dass die erste und die zweite Welle (101; 103) relativ zueinander beweglich sind, um die Siegelbacken (102; 104) eines der Siegelelemente (132) zur Aufnahme des Beutels (42) und des Umhüllungsmaterials (40) voneinander zu beabstanden und zum Siegeln des Umhüllungsmaterials (40) gegeneinander anzulegen und dass die beiden Wellen (101; 103) über eine Zwangsführung gekoppelt sind, die eine Schiebehülse (106) umfasst, wobei die Schiebehülse (106) verschieblich auf der ersten Welle (101) gehalten ist, die Schiebehülse (106) stirnseitig mit Formschlusselementen (108) versehen ist, wobei die Schiebehülse (106) mit zugeordneten Formschlussgegenelementen (110) der zweiten Welle (103) in Eingriff steht und wobei die Schiebehülse (106) mit der ersten Welle (101) über eine Hülsenführung (116; 118) gekoppelt ist.

2. Vorrichtung nach Anspruch 1, **dadurch gekennzeichnet, dass** die Siegelbacken (102; 104) im Wesentlichen starr an der zugeordneten Welle (101; 103) befestigt sind.

3. Vorrichtung nach Anspruch 1 oder 2, **gekennzeichnet durch** ein Vorspannelement, das beim Anliegen der Siegelbacken (102; 104) auf zumindest eine der Siegelbacken (102; 104) einwirkt und die Siegelbacken (102; 104) unter Vorspannung gegeneinander angelegt hält.

4. Vorrichtung nach einem der vorherigen Ansprüche, **dadurch gekennzeichnet, dass** die beiden Wellen (101; 103) über eine gemeinsame Antriebswelle (140) angetrieben sind.

5. Vorrichtung nach Anspruch 1, **dadurch gekennzeichnet, dass** die Schiebehülse (106) einen Antriebskranz (120) aufweist, der mit einem von der Antriebswelle (33) angetriebenen Schieber (121) zum axialen Verschieben der Schiebehülse (106) zusammenwirkt.

6. Vorrichtung nach einem der vorherigen Ansprüche, **dadurch gekennzeichnet, dass** die erste Welle (101) und die zweite Welle (103) jeweils angetrieben sind.

7. Vorrichtung nach Anspruch 6, **dadurch gekennzeichnet, dass** ein zum Vortrieb der angetriebenen Welle (101; 103) erforderliches Drehmoment über die aneinander anliegenden Siegelbacken (102; 104) übertragen wird.

8. Vorrichtung nach einem der vorherigen Ansprüche, **gekennzeichnet durch** eine der Siegelstation (100) zugeordnete Klemmeinrichtung (46), die relativ zu zumindest einer der Siegelbacken (102; 104) beweglich ist, um den Beutel (42) zusammen mit dem Umhüllungsmaterial (40) vor dem Schließen der Siegelbacken (102, 104) zwischen den Siegelbacken (102, 104) zu halten.

## Claims

1. A device for producing a bag containing a brewable material and enclosed in a wrapper, comprising a bag-making device (2) that is set up to make a bag (42) containing brewable material in a water-permeable wrapper, and comprising a sealing station having two sealing jaws (102; 104) movable relative to each other for sealing the bag (42) in a wrapping formed by a wrapping material (40),
**characterized in**
**that** the sealing station (100) comprises a first shaft (101) carrying at least one first sealing jaw (102), and a second shaft (103) carrying at least one second sealing jaw (104) cooperating with the first sealing jaw (102) for sealing the wrapping, the first and second shafts (101; 103) being movable relative to one another to space the sealing jaws (102; 104) of one of the sealing elements (132) for receiving the bag (42) and the wrapping material (40) apart from each other and to apply them against each other to seal the wrapping material (40), and that the two shafts (101; 103) are coupled via a constrained guidance, comprising a sliding sleeve (106), the sliding sleeve (106) being held displaceably on the first shaft (101), the sliding sleeve (106) being provided on the end face with form-locking elements (108), the sliding sleeve (106) being in engagement with associated form-locking mating elements (110) of the second shaft (103), and the sliding sleeve (106) being coupled to the first shaft (101) via a sleeve guide (116; 118).

2. The device according to claim 1, **characterized in that** the sealing jaws (102; 104) are substantially rigidly attached to the associated shaft (101; 103).

3. The device according to claim 1 or 2, **characterized by** a prestressing element which, when the sealing jaws (102; 104) are in contact, acts on at least one of the sealing jaws (102; 104) and holds the sealing jaws (102; 104) in contact with each other under prestressing.

4. The device according to one of the previous claims, **characterized in that** the two shafts (101; 103) are driven by a common drive shaft (140).

5. The device according to claim 1, **characterized in that** the sliding sleeve (106) has a drive collar (120) which cooperates with a slide (121) driven by the drive shaft (33) for axially displacing the sliding sleeve (106).

6. The device according to one of the previous claims, **characterized in that** the first shaft (101) and the second shaft (103) are each driven.

7. The device according to claim 6, **characterized in that** a torque required for driving the driven shaft (101; 103) is transmitted via the sealing jaws (102; 104) bearing against one another.

8. The device according to one of the previous claims, **characterized by** a clamping device (46) associated with the sealing station (100) movable relative to at least one of the sealing jaws (102; 104) to hold the bag (42) together with the wrapping material (40) between the sealing jaws (102, 104) prior to the closure of the sealing jaws (102, 104).

## Revendications

1. Dispositif de fabrication d'un sachet prévu dans une enveloppe, contenant un matériau pouvant être infusé, comprenant un dispositif de fabrication de sachet (2) qui est configuré pour fabriquer un sachet (42) contenant un matériau pouvant être infusé dans une enveloppe perméable à l'eau, et un poste de scellement avec deux mâchoires de scellement (102 ; 104) mobiles l'une par rapport à l'autre pour sceller le sachet (42) dans une enveloppe formée par un matériau d'enveloppe (40), **caractérisé en ce que** le poste de scellement (100) comprend un premier arbre (101) qui porte au moins une première mâchoire de scellement (102) et un second arbre (103) qui porte au moins une seconde mâchoire de scellement (104) coopérant avec la première mâchoire de scellement (102) lors du scellement de l'enveloppe, **en ce que** les premier et second arbres (101 ; 103) sont mobiles l'un par rapport à l'autre pour espacer l'une de l'autre les mâchoires de scellement (102 ; 104) de l'un des éléments de scellement (132) afin de recevoir le sachet (42) et le matériau d'enveloppe (40) et pour les appuyer l'une contre l'autre pour sceller le matériau d'enveloppe (40), et **en ce que** les deux arbres (101 ; 103) sont couplés par un guidage forcé qui comprend un manchon coulissant (106), le manchon coulissant (106) étant maintenu de manière coulissante sur le premier arbre (101), le manchon coulissant (106)) étant muni du côté frontal d'éléments à verrouillage par complémentarité de forme (108), le manchon coulissant (106) étant en prise avec des éléments de verrouillage par complémentarité de forme (110) associés du deuxième arbre (103), et le manchon coulissant (106) étant couplée au premier arbre (101) par l'intermédiaire d'un guide de manchon (116 ; 118).

2. Dispositif selon la revendication 1, **caractérisé en ce que** les mâchoires de scellement (102 ; 104) sont fixées de manière sensiblement rigide à l'arbre associé (101 ; 103).

3. Dispositif selon la revendication 1 ou 2, **caractérisé par** un élément de précontrainte qui agit sur au moins une des mâchoires de scellement (102 ; 104) lorsque les mâchoires de scellement (102 ; 104) sont appuyées l'une contre l'autre, et maintient les mâchoires de scellement (102 ; 104) appuyées l'une contre l'autre sous précontrainte.

4. Dispositif selon l'une des revendications 9 à 11, **caractérisé en ce que** les deux arbres (101 ; 103) sont entraînés par l'intermédiaire d'un arbre d'entraînement commun (140).

5. Dispositif selon la revendication 1, **caractérisé en ce que** le manchon coulissant (106) présente une couronne d'entraînement (120) qui coopère avec un coulisseau (121) entraîné par l'arbre d'entraînement (33) pour déplacer axialement le manchon coulissant (106).

6. Dispositif selon l'une quelconque des revendications précédentes, **caractérisé en ce que** le premier arbre (101) et le second arbre (103) sont entraînés respectivement.

7. Dispositif selon la revendication 6, **caractérisé en ce qu'**un couple nécessaire à la propulsion de l'arbre entraîné (101 ; 103) est transmis par l'intermédiaire des mâchoires de scellement (102 ; 104) adjacentes.

8. Dispositif selon l'une des revendications précédentes, **caractérisé par** un dispositif de serrage (46) associé au poste de scellement (100), qui est mobile par rapport à au moins l'une des mâchoires de scellement (102 ; 104), afin de maintenir le sachet (42) entre les mâchoires de scellement (102, 104), conjointement avec le matériau d'enveloppe (40), avant la fermeture des mâchoires de scellement (102, 104).
